# EUROPÄISCHE PATENTANMELDUNG

(11) **EP 0 613 751 A1**
(43) Veröffentlichungstag der Anmeldung: **07.09.1994**
(21) Anmeldenummer: 94102283.2
(22) Anmeldetag: 15.02.1994
(51) Int. Cl.: B23K 13/02

(54) **Anordnung zum Induktionsschweissen von Rohren**

(30) Priorität: 01.03.1993 DE 4306309
(71) Anmelder: SIEMENS AKTIENGESELLSCHAFT, D-80333 München (DE)
(72) Erfinder: Lessmann, Hans-Jürgen, Dipl.-Ing., D-30171 Hannover (DE); Muiznieks, Andris, Dr., Riga (LV)

(57) **Zusammenfassung**

Beim Induktionsschweißen von Rohren wird ein Metallband zu einem Schlitzrohr verformt, dessen beiden Schlitzränder induktiv erwärmt und durch Aneinanderdrücken zu einer Schweißnaht verbunden werden. Ein Magnetkern im Inneren des Schlitzrohres und Mittel aus Ferrit außerhalb des Schlitzrohres im Bereich des Schlitzes dienen zur Führung des Magnetfeldes und so zur Verbesserung der Energieausnutzung.

Um die Energieausnutzung noch weiter zu verbessern, ragen die Mittel aus Ferrit (10, 11, 12, 13) auf der der Schweißnaht (8) angewandten Seite des Induktors (3) in den Schlitz (2) hinein und sind mit dem Magnetkörper (9) verbunden.

## Beschreibung

Die Erfindung betrifft eine Anordnung zum Induktionsschweißen von Rohren, wobei ein Metallband zu einem Schlitzrohr verformt wird, dessen beide Schlitzränder induktiv erwärmt und durch Aneinanderdrücken zu einer Schweißnaht verbunden werden, mit einem das Schlitzrohr ringförmig umgebenden Hochfrequenzinduktor und einem im Inneren des Schlitzrohres angeordneten Magnetkern (Impeder), wobei außerhalb des Schlitzrohres im Bereich des Schlitzes Mittel aus Ferrit zur Führung des Magnetfeldes angeordnet sind.

Eine derartige Anordnung ist aus der US-A-3 397 295 bekannt. Dabei wird durch den Induktor in dem Schlitzrohr ein elektrischer Strom induziert, der sich in Umfangsrichtung des Rohres ausbreitet und entlang der Schlitzränder konzentriert verläuft. Die hierdurch auf eine ausreichend hohe Schweißtemperatur erhitzten Schlitzränder werden mit Hilfe von Druckrollen zu der Schweißnaht verbunden. Der im Inneren des Rohres angeordnete Magnetkern oder Impeder dient zur Erhöhung der induktiven Reaktanz für den entlang der Rohrinnenfläche induzierten Stromfluß. Dieser Stromfluß, der für den Schweißvorgang ohne Wert ist, wird dadurch reduziert, wodurch die Ausnutzung der von dem Induktor zugeführten Energie für den Schweißvorgang verbessert wird. Durch einen Ferritkörper, der außerhalb des Schlitzrohres im Bereich des Schlitzes angeordnet ist, wird eine Erhöhung der Feldkonzentration im Bereich des Schlitzes bewirkt, wodurch die elektrische Stromdichte in entsprechender Weise in den Schlitzrändern erhöht und in den Nebenbereichen des Schlitzes verringert wird. Weitere Anordnungen zum Induktionsschweißen von Rohren sind aus M.M. Schwartz: "Metals Joining Manual", Mc Graw-Hill, 1979, Seite 4-1 ff, der US-A-3 648 005, DE-A-1 299 497, DE-A-22 15 431 und der SU-A-527 271 bekannt.

Der Erfindung liegt die Aufgabe zugrunde, die Energieausnutzung beim Induktionsschweißen von Rohren noch weiter zu verbessern.

Gemäß der Erfindung wird die Aufgabe dadurch gelöst, daß bei der Anordnung der eingangs angegebenen Art die Mittel aus Ferrit auf der der Schweißnaht abgewandten Seite des Induktors in den Schlitz hineinragen und mit dem Magnetkörper verbunden sind. Dabei wird das Magnetfeld aus dem Inneren des Rohres radial nach außen geführt, wodurch der Stromanteil im Bereich des Schlitzes zwischen dem Induktor und dem Beginn der Schweißnaht erhöht wird.

Die Mittel aus Ferrit weisen vorzugsweise einen Körper auf, der zwischen dem Induktor und dem Beginn der Schweißnaht unmittelbar über dem Schlitz angeordnet ist. Vorzugsweise ergänzend hierzu weisen die Mittel aus Ferrit einen Körper auf, der auf der, der Schweißnaht abgewandten Seite des Induktors unmittelbar über dem Schlitz angeordnet ist. Dabei ist der Abstand der Ferritkörper von dem Rohr möglichst gering. Der zwischen dem Induktor und dem Beginn der Schweißnaht angeordnete Ferritkörper führt durch eine Erhöhung der Feldkonzentration im Bereich des Schlitzes zur Steigerung der Leistung in den Schlitzrändern gegenüber der in den Nebenbereichen des Schlitzes. Der Körper auf der, der Schweißnaht abgewandten Seite des Induktors bewirkt darüber hinaus eine Erhöhung der Induktivität des betreffenden Schlitzbereiches und verursacht dadurch ein Anwachsen des Stromes in den Schlitzrändern zwischen Induktor und dem Beginn der Schweißnaht im Verhältnis zum Gesamtstrom im Rohr.

Um eine bessere magnetische Kopplung zwischen den Ferritkörpern auf beiden Seiten des Induktors zu erzielen, weisen die Mittel aus Ferrit einen weiteren Körper auf, der im Bereich des Schlitzes unmittelbar über dem Induktor angeordnet ist.

Um eine Aufsummierung der oben für jeden einzelnen der Ferritkörper genannten Wirkungen zu erreichen, ist vorgesehen, daß die Ferritkörper miteinander verbunden sind, so daß sich durch die Ferritkörper und den Magnetkern im Inneren des Rohres ein ferritischer Magnetkreis bildet, der nur noch im Bereich des Schlitzes zwischen dem Induktor und dem Beginn der Schweißnaht unterbrochen ist.

Eine weitere Maßnahme zur Erhöhung des Wirkungsgrades der erfindungsgemäßen Anordnung besteht darin, daß der Induktor auf seiner, dem Schlitz abgewandten Seite eine größere Ausdehnung in Längsrichtung des Rohres aufweist, als auf der, dem Schlitz gegenüberliegenden Seite. Dabei fuhrt die größere Ausdehnung des Induktors auf seiner von dem Schlitz abgewandten Seite zu einer Verringerung der Stromdichte im Rohrrücken und damit zu einer Verringerung der Verlustleistung.

Schließlich ist im Rahmen der Erfindung vorgesehen, daß sich der Magnetkern in Richtung von der Schweißnaht weg über den Induktor hinaus in einer Länge durch das Schlitzrohr erstreckt, die zumindest dem Doppelten, vorzugsweise einem Mehrfachen des Rohrdurchmessers entspricht. Je weiter der Magnetkern sich über den Induktor hinaus erstreckt, desto größer wird die Reaktanz für den Teil des Stroms im Rohr, der nicht über den Beginn der Schweißnaht fließt, sondern sich über Rohrbereiche schließt, die, in Durchlaufrichtung des Rohres gesehen, vor dem Induktor liegen. Durch die vorgesehene Verlängerung des Magnetkerns wächst demnach das Verhältnis zwischen dem Strom in den Schlitzrändern zwischen dem Induktor und dem Beginn der Schweißnaht, also dem Nutzstrom, und dem Gesamtstrom im Rohr an, was zu einer Verringerung der für den Schweißvorgang erforderlichen Gesamtleistung führt.

Zur Erläuterung der Erfindung wird im folgenden auf die Figuren der Zeichnung Bezug genommen. Im einzelnen zeigen
- FIG 1: ein erstes Ausführungsbeispiel der erfindungsgemäßen Anordnung,
- FIG 2: ein Beispiel für die Stromaufteilung im Rohr bei einer herkömmlichen Anordnung zum Induktionsschweißen,
- FIG 3: den Einfluß von Ferritkörpern auf die Stromverteilung im Rohr und
- FIG 4: den Einfluß einer veränderten Induktorform auf die Stromverteilung im Rohr.

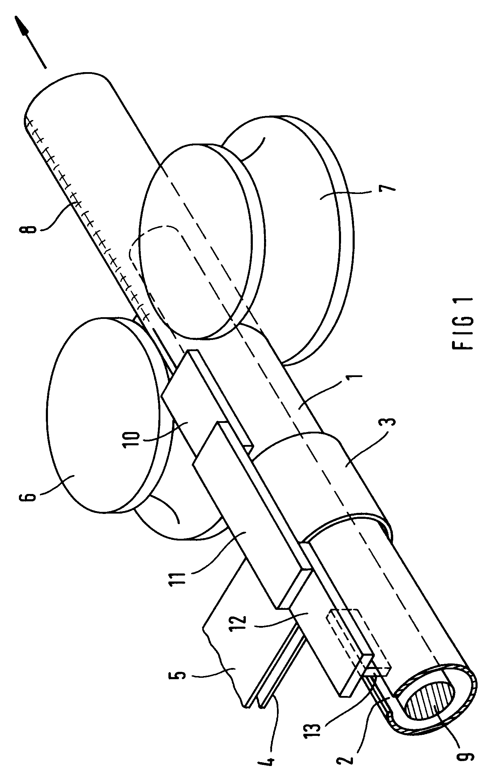

FIG 1 zeigt ein Stahlband, das nach Durchlaufen von hier nicht gezeigten Einrichtungen kalt zu einem Schlitzrohr 1 geformt ist. Das Schlitzrohr 1, dessen Schlitz mit 2 bezeichnet ist, durchläuft einen Hochfrequenzinduktor 3, der über Zuleitungen 4 und 5 mit einem hochfrequenten Strom gespeist wird und dabei die Schlitzränder auf eine Temperatur von beispielsweise 1400°C induktiv erwärmt. In einem vorgegebenen Abstand hinter dem Induktor 3 von etwa 0,5 bis 1,5 Rohrdurchmessern werden die erwärmten Schlitzränder mit Hilfe zweier Druckrollen 6 und 7 zu einer Schweißnaht 8 verbunden. Im Bereich des Induktors 3 ist im Inneren des Schlitzrohres 1 ein Magnetkern 9 (Impeder) angeordnet, der sich etwa von der Stelle des Beginns der Schweißnaht 8 über den Induktor 3 hinaus möglichst weit in Richtung der Öffnung des Schlitzes 2 erstreckt. Der Magnetkern 9 dient zur Erhöhung der induktiven Reaktanz für den auf der Rohrinnenseite fließenden induzierten Strom, der für den Schweißvorgang ohne Nutzen ist und dadurch reduziert wird.

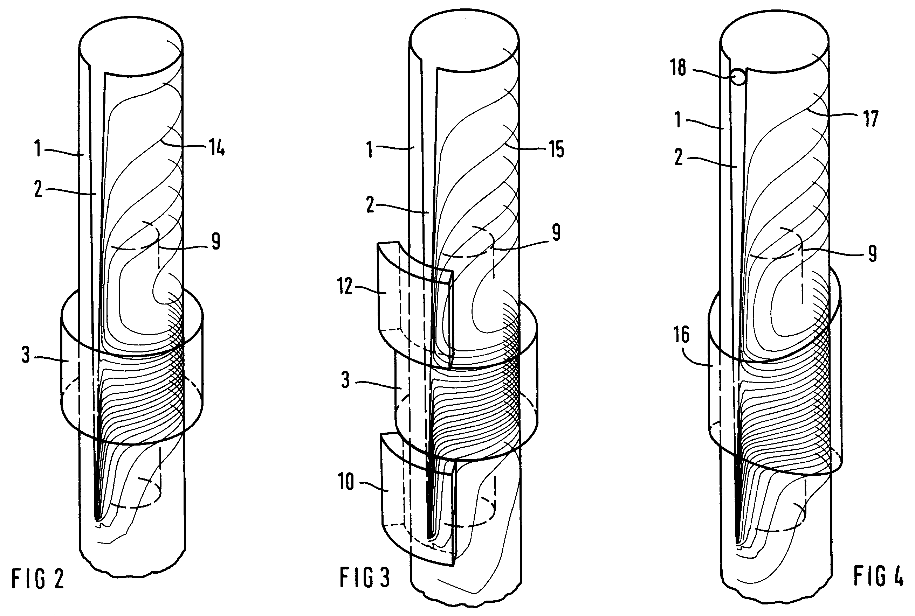

Zwischen dem Induktor 3 und dem Beginn der Schweißnaht 8 ist unmittelbar über dem Schlitz 2 und in möglichst dichtem Abstand zu diesem ein plattenförmiger Ferritkörper 10 angeordnet, der die Feldkonzentration im Spaltbereich erhöht und, wie anhand der FIG 2 und 3 noch erläutert wird, eine Konzentration des in dem Rohr 1 induzierten Stromes auf die Spaltränder bewirkt.

Unmittelbar über dem Induktor 3 ist gegenüber dem Schitz 2 ein weiterer Ferritkörper 11 angeordnet, der mit dem Ferritkörper 10 verbunden ist. Dieser weitere Ferritkörper 11 bewirkt, daß der magnetische Widerstand für den Magnetfluß durch den Schlitz 2 abnimmt.

Ein dritter Ferritkörper 12, der auf der, der Schweißnaht 8 abgewandten Seite des Induktors 3 unmittelbar über dem Schlitz 2 angeordnet ist, bewirkt eine Erhöhung der Induktivität des betreffenden Schlitzbereiches und somit ein Ansteigen des Rohrstromanteiles, der über den Beginn der Schweißnaht 8 fließt.

Schließlich ist auf der von der Schweißnaht 8 abgewandten Seite des Induktors 3 ein vierter Ferritkörper 13 angeordnet, der sich durch den Schlitz 2 hindurch erstreckt und den Magnetkern 9 mit dem dritten Ferritkörper 12 verbindet. Die Ferritkörper 10, 11, 12 und 13 bilden zusammen mit dem Magnetkern 9 einen Magnetkreis, der nur im Bereich des Schlitzes 2 zwischen dem Induktor 3 und dem Beginn der Schweißnaht 8 geöffnet ist.

FIG 2 zeigt die Stromverteilung 14 des in dem Schlitzrohr 1 induzierten Stromes bei einer herkömmlichen Anordnung, die lediglich aus dem Induktor 3 und dem Magnetkern 9 besteht.

Im Vergleich dazu zeigt FIG 3 eine um zwei Ferritkörper 10 und 12 erweiterte Anordnung, wobei die Ferritkörper 10 und 12 beiderseits des Induktors 3 unmittelbar über dem Schlitz 2 angeordnet sind. Wie FIG 3 zu entnehmen ist, wird durch die beiden Ferritkörper 10 und 12 eine Konzentration der Stromverteilung 15 in den Schlitzrändern des Rohres 1 erreicht.

FIG 4 zeigt einen Induktor 16, der auf der Rückseite des Rohres 1 eine größere Ausdehnung in Längsrichtung des Rohres 1 aufweist, als auf seiner dem Schlitz 2 unmittelbar gegenüberliegenden Seite. Die Verbreiterung des Induktors 16 im Rohrrückenbereich führt zu einer Verringerung der Stromdichte 17 im Rohrrücken und damit zu einer Verlustleistungsabsenkung.

Bei den in den Figuren 1 bis 4 gezeigten Anordnungen erstreckt sich der Magnetkern 9 in Richtung des geöffneten Schiltzes 2, also von der Schweißnaht 8 weg über den Induktor 3 bzw. 16 hinaus. Dabei steigt das Verhältnis zwischen dem Strom in den Schlitzrändern zwischen dem Induktor 3 bzw. 16 und dem Beginn der Schweißnaht 8, also dem Nutzstrom zu dem Gesamtstrom im Rohr 1 mit zunehmender Länge des Magnetkerns 9 an, so daß die Länge des Magnetkerns 9 so groß wie möglich gewählt wird.

Wird, wie in FIG 4 gezeigt, eine nichtleitende Spreizrolle 18 zur definierten Einstellung des Schlitzwinkels verwendet, so stellt die Spreizrolle keine leitfähige Verbindung zwischen den Schlitzrändern dar und beeinfluß damit nicht das Verhältnis zwischen Nutzstrom und Gesamtstrom.

## Patentansprüche

1. Anordnung zum Induktionsschweißen von Rohren, wobei ein Metallband zu einem Schlitzrohr (1) verformt wird, dessen beide Schlitzränder induktiv erwärmt und durch Aneinanderdrücken zu einer Schweißnaht (8) verbunden werden, mit einem das Schlitzrohr (1) ringförmig umgebenden Hochfrequenzinduktor (3) und einem im Inneren des Schlitzrohres (1) angeordneten Magnetkern (9) (Impeder), wobei außerhalb des Schlitzrohres (1) im Bereich des Schlitzes (2) Mittel aus Ferrit (10, 11, 12, 13) zur Führung des Magnetfeldes angeordnet sind,
**dadurch gekennzeichnet**,
daß die Mittel aus Ferrit (10, 11, 12, 13) auf der, der Schweißnaht (8) abgewandten Seite des Induktors (3) in den Schlitz (2) hineinragen (Körper 13) und mit dem Magnetkörper (9) verbunden sind.

2. Anordnung nach Anspruch 1,
**dadurch gekennzeichnet**,
daß die Mittel aus Ferrit einen Körper (10) aufweisen, der zwischen dem Induktor (3) und dem Beginn der Schweißnaht (8) unmittelbar über dem Schlitz (2) angeordnet ist.

3. Anordnung nach Anspruch 1 oder 2,
**dadurch gekennzeichnet**,
daß die Mittel aus Ferrit einen Körper (12) aufweisen, der auf der, der Schweißnaht (8) abgewandten Seite des Induktors (3) unmittelbar über dem Schlitz (2) angeordnet ist.

4. Anordnung nach einem der vorangehenden Ansprüche,
**dadurch gekennzeichnet**,
daß die Mittel aus Ferrit einen weiteren Körper (11) aufweisen, der im Bereich des Schlitzes (2) unmittelbar über dem Induktor (3) angeordnet ist.

5. Anordnung nach einem der vorangehenden Ansprüche 3 bis 5,
**dadurch gekennzeichnet**,
daß die Ferritkörper (10, 11, 12, 13) miteinander verbunden sind.

6. Anordnung nach einem der vorangehenden Ansprüche,
**dadurch gekennzeichnet**,
daß der Induktor (16) auf seiner dem Schlitz (2)abgewandten Seite eine größere Ausdehnung in Längsrichtung des Rohres (1) aufweist, als auf der dem Schlitz (2) gegenüberliegenden Seite.

7. Anordnung nach einem der vorangehenden Ansprüche,
**dadurch gekennzeichnet**,
daß sich der Magnetkern (9) in Richtung von der Schweißnaht (8) weg über den Induktor (3) hinaus in einer Länge durch das Schlitzrohr (1) erstreckt, die zumindest dem Doppelten, vorzugsweisen einem Mehrfachen des Rohrdurchmessers entspricht.
